# EUROPÄISCHE PATENTSCHRIFT

(11) **EP 2 454 500 B1**
(45) Veröffentlichungstag und Bekanntmachung des Hinweises auf die Patenterteilung: **23.10.2013**
(21) Anmeldenummer: 10725995.4
(22) Anmeldetag: 17.06.2010
(51) Int. Cl.: F16D 13/62, F16D 69/02

(54) **REIBRING UND VERFAHREN ZU SEINER HERSTELLUNG**
FRICTION RING AND METHOD FOR THE PRODUCTION THEREOF
ANNEAU DE FRICTION ET SON PROCÉDÉ DE FABRICATION

(30) Priorität: 19.06.2009 DE 102009025540
(43) Veröffentlichungstag der Anmeldung: 23.05.2012
(73) Patentinhaber: Hoerbiger Antriebstechnik Holding GmbH, 86956 Schongau (DE)
(72) Erfinder: BERGHEIM, Michael, 87672 Rosshaupten (DE); NICKEL, Falk, 86925 Fuchstal (DE); OHR, Andreas, 86956 Schongau (DE)
(74) Vertreter: Prinz & Partner
(86) Internationale Anmeldenummer: PCT/EP2010/003662
(87) Internationale Veröffentlichungsnummer: WO 2010/145826

(56) Entgegenhaltungen:
- EP-A1- 1 396 655
- EP-A1- 1 731 785

## Beschreibung

Die Erfindung betrifft einen Reibring mit einem Träger und einem Reibbelag, wie er beispielsweise in nasslaufenden Kupplungen oder in Getrieben verwendet werden kann. Die Erfindung betrifft ferner ein Verfahren zur Herstellung eines solchen Reibrings.

Bestimmend für die Qualität des Reibrings, also insbesondere für das Verschleißverhalten und den Reibwert über die gesamte Lebensdauer, ist der Reibbelag. Zum einen wird grundsätzlich ein hoher Reibwert gewünscht, da dies die Drehmomentübertragung verbessert. Zum anderen wird ein möglichst geringer Verschleiß gefordert, damit der Reibring eine lange Lebensdauer hat. Zusätzlich soll der Reibring insgesamt mit geringen Kosten hergestellt werden können.

Bekannt sind Reibringe, die einen Reibbelag aus einem Papier-ähnlichen Material aufweisen. Dieses im Folgenden als "Reibpapier" bezeichnete Material wird aufgrund seines Herstellungsverfahrens in der Form von Bögen geliefert. Aus den Reibpapier-Bögen werden dann die einzelnen Reibbelag-Segmente ausgeschnitten und auf den Träger aufgebracht, beispielsweise aufgeklebt. Nachteilig ist dabei der unvermeidbare Verschnitt. Außerdem sind die Herstellungskosten von Reibpapier vergleichsweise hoch.

Es sind auch verschiedene Versuche bekannt, den Reibbelag in einem fließfähigen Zustand auf den Träger aufzubringen und dort zu verfestigen. Ein Beispiel für ein solches Verfahren findet sich in der DE 10 2008 036 332. Dort wird auf den Träger eine Füllform aufgebracht, um ähnlich wie bei einem Siebdruckverfahren die Reibbelagmasse aufbringen zu können. Nach dem Aufbringen wird die Reibbelagmasse getrocknet und ausgehärtet, beispielsweise mittels UV-Strahlung. Hinsichtlich der verwendeten Reibbelagmasse finden sich in der genannten Offenlegungsschrift nur unvollständige Angaben. Neben der Problematik des Prozesses ist bisher kein geeignetes Material bekannt, welches die Eignung für den Prozess und die Funktion gleichermaßen erfüllt. Aus diesem Grund konnten interessante Ansätze dieser Art bisher nicht erfolgreich umgesetzt werden.

Die Aufgabe der Erfindung besteht daher darin, einen Reibring mit Reibbelag zu schaffen, der kostengünstig hergestellt werden kann und gleichzeitig die Anforderungen hinsichtlich Reibwertverhalten und Verschleiß erfüllt oder sogar noch übertrifft. Der Nächstliegender Stand der Technik findet sich in EP-1396655, und EP-1731785.

Zur Lösung dieser Aufgabe ist ein Reibring mit einem Träger und einem Reibbelag vorgesehen, wobei der Reibbelag aus einem Gemisch aus Harz, Füllstoff und Fasern besteht und sich unter den Fasern im Wesentlichen keine fibrillierten Fasern befinden. Erfindungsgemäß sind die Fasern im Reibbelag gerichtet. Die Erfindung beruht auf der Erkenntnis, dass fibrillierte Fasern, wie sie sich normalerweise in großem Anteil in dem Material befinden, das für Reibpapier verwendet wird, dafür verantwortlich sind, dass keine fließfähige Reibmasse zubereitet werden konnte, die anschließend auf einen Träger aufgebracht und dort zu einem funktionierenden Reibbelag ausgehärtet werden konnte. Ein solcher Reibring ist besonders geeignet für nasslaufende Lamellenreibsysteme, insbesondere nasslaufende Kupplungen, nasslaufende Bremsen und als Synchronring in einem Getriebe. Diese Gestaltung beruht auf der Erkenntnis, dass eine definierte Ausrichtung der Fasern vorteilhaft für das Betriebsverhalten des Reibbelags ist. Unter "gerichteten Fasern" werden dabei Fasern verstanden, die zu einem weit überwiegenden Teil in einer vorgegebenen und zielgerichtet herbeigeführten Ausrichtung im Reibbelag enthalten sind, im Gegensatz zu den Fasern, die beispielsweise bei Reibpapier zufällig verteilt sind.

Vorzugsweise ist vorgesehen, dass die Länge der Fasern maximal 0,3 mm beträgt. Es hat sich herausgestellt, dass kürzere Fasern, insbesondere kürzer als diejenigen, die bei Reibpapier verwendet werden, vorteilhaft für die Verarbeitbarkeit des fließfähigen Reibbelagmaterials sind. Die Länge der Fasern kann aber auch in der Größenordnung von 0,2 mm oder sogar noch darunter betragen. Die Verwendung von derart kurzen Fasern beruht auf der überraschenden Erkenntnis, dass auch solch kurze Fasern zuverlässig in den Reibbelag eingebettet werden können, also ein unerwünschtes Herauslösen aus dem Faserverbund nicht zu befürchten ist, während die Fasern aufgrund ihrer geringen Länge sehr gut verarbeitet werden können.

In Abhängigkeit von den jeweiligen Einsatzbedingungen kann vorgesehen sein, dass die Fasern in Umfangsrichtung ausgerichtet sind. Andere mögliche Ausrichtungen der Fasern umfassen eine radiale Ausrichtung oder eine wellenförmige Ausrichtung.

Vorzugsweise bestehen die Fasern aus einem Material, das eine Schmelztemperatur größer 400 °C hat. Dies ist im Hinblick auf die Einsatzbedingungen des Reibrings und auf das Verschleißverhalten vorteilhaft.

Gemäß einer Ausführungsform handelt es sich bei den Fasern um Carbonfasern, Glasfasern oder Melaminfasern. Diese Materialien haben sich als vorteilhaft im Verschleißverhalten herausgestellt.

Grundsätzlich ist der Masseanteil der Fasern im erfindungsgemäßen Reibbelag in einem überraschend weiten Bereich variabel. So wurde festgestellt, dass der Masseanteil der Fasern im Bereich von 5 % bis 90 % des Feststoffanteils betragen kann, ohne dass die Betriebseigenschaften in signifikanter Weise beeinträchtigt würden. Efindungsgemäß bevorzugt wird aber, dass der Masseanteil der Fasern im Bereich von 10 bis 20 % des Feststoffanteils beträgt, insbesondere in der Größenordnung von 15 %.

Gemäß einer bevorzugten Ausführungsform der Erfindung enthält der Reibbelag ein Thixotropiermittel. Das Thixotropiermittel erleichtert die Verarbeitung der Reibbelagmasse, da es während des Auftragens die Viskosität herabsetzt, jedoch nach dem Auftragen der Reibbelagmasse die Viskosität erhöht.

Als Thixotropiermittel können Schichtsilikate, insbesondere Smektite, verwendet werden. Ein solches Thixotropiermittel beeinflusst das Reib- und Verschleißverhalten auch bei hohen Betriebstemperaturen nicht. Für die Verschleißbelastungen bei hohen Temperaturen ist auch vorteilhaft, dass das Thixotropiermittel Lithium-lonen enthält. Außedem kann ein hitzebeständiger Füllstoff im Reibbelag vorhanden sein, beispielsweise Graphit. Der hitzebeständige Füllstoff verbessert die Reibungseigenschaften und das Verschleißverhalten. Der Begriff Füllstoff' steht hier als Oberbegriff sowohl für einen sortenreinen Füllstoff als auch für eine Mischung aus verschiedenen Materialien, die zusammen den Füllstoff bilden.

Gemäß einer bevorzugten Ausführungsform ist vorgesehen, dass der Reibbelag ein hitzebeständiges Harz enthält. Das Harz dient dazu, die Fasern fest in den Reibbelag einzubinden. Im Hinblick auf die auftretenden Betriebstemperaturen ist die Wärmefestigkeit des Harzes von entscheidender Bedeutung. Dabei wird erfindungsgemäß bevorzugt, dass der Masseanteil des Harzes im Bereich von 15 % bis 40 % des Feststoffanteils beträgt, insbesondere in der Größenordnung von 30 %. Bei diesen Werten ergibt sich ein guter Kompromiss zwischen Herstellungsaufwand und -kosten einerseits und dem Verschleißverhalten andererseits.

Als Harz besonders geeignet ist ein pulverförmiges Resol-Phenolharz.

Gemäß einer bevorzugten Ausführungsform der Erfindung ist vorgesehen, dass der Reibbelag unmittelbar auf dem Träger aufgebracht ist. Dies beruht auf der Erkenntnis, dass der erfindungsgemäße Reibbelag aufgrund seiner Zusammensetzung unmittelbar mit dem Träger verklebt werden kann, ohne dass eine Klebstoff-Zwischenschicht notwendig ist, wie dies bei Reibpapier der Fall ist. Durch den Verzicht auf die Klebstoff-Zwischenschicht ergeben sich geringere Herstellungskosten.

Gemäß einer bevorzugten Ausführungsform ist vorgesehen, dass der Reibbelag mindestens eine Nut aufweist. Die Nut ermöglicht es, dass Öl im Bereich des Reibbelags zirkuliert, wodurch die entstehende Reibungswärme abgeführt werden kann. Bei geeigneter Mikrostruktur des Reibbelags ist es in einigen Ausführungsvarianten möglich, auf eine Nutung komplett zu verzichten und die Belagtemperatur trotzdem in einem akzeptablen Bereich zu halten. Die Nut könnte beispielsweise zwischen zwei Blöcken des Reibbelags vorgesehen sein, so dass die Nut unmittelbar bei der Herstellung des Reibbelags erzeugt werden kann, ohne dass nach dem Aufbringen des Reibbelags weitere Arbeitsschritte erforderlich sind.

Gemäß einer alternativen Ausgestaltung weist die Nut eine Querschnittsform auf, die sich von der Oberfläche des Reibbelags zum Träger hin aufweitet. Bei dieser Querschnittsform ergibt sich eine hohe Querschnittsfläche für die Zirkulation des Öls, während gleichzeitig eine große Oberfläche des Reibbelags aufrechterhalten bleibt. Wenn bei dieser Nutenform schräg angestellte Seitenwände verwendet werden, ergibt sich ein spitzer Winkel zwischen den Seitenwänden und der Oberfläche des Reibbelags, wodurch eine sehr präzise definierte Abstreifkante für das Öl gebildet werden kann.

Gemäß einer bevorzugten Ausführungsform der Erfindung ist vorgesehen, dass die Fasern am Rand des Reibbelags vom Träger weg abgebogen sind. Im Gegensatz zu einem Reibbelag aus Reibpapier, bei dem die Fasern am Rand des Reibbelags von diesem abstehen, sodass der Reibbelag "ausgefranst" aussieht, stehen beim erfindungsgemäßen Reibbelag die Fasern am Rand nicht seitlich von diesem ab, sondern sind an den Reibbelag angelegt. Auf diese Weise ergibt sich ein verbesserter Ölfluss um den Reibbelag herum.

Falls besonders kurze Fasern verwendet werden, ist vorgesehen, dass die Fasern am Rand des Reibbelags an diesen angelegt sind, sich also etwa senkrecht zum Träger erstrecken. Auch dies gewährleistet, dass die Fasern am Rand nicht vom Reibbelag abstehen, sondern glatt anliegen.

Gemäß einer bevorzugten Ausführungsform der Erfindung ist vorgesehen, dass das Drucksteifigkeitsverhältnis des Reibbelags kleiner 40 % ist, insbesondere kleiner 30% und besonders bevorzugt kleiner 20%. Das Drucksteifigkeitsverhältnis gibt das Verhältnis von plastischer zu gesamter Deformation des Reibbelags an, wie es bei einem standardisierten Druck-Setzungstest ermittelt werden kann. Anders als Reibpapier, bei dem sich eine vergleichsweise hohe plastische Verformung bei Druckbelastungen ergibt, kann der erfindungsgemäße Reibbelag mit seinen vergleichsweise kurzen Fasern so eingestellt werden, dass sich eine vergleichsweise kleine plastische Deformation bei hohem elastischem Verformungsvermögen ergibt. Dies ist vorteilhaft im Hinblick auf ein konstantes Reibverhalten über eine hohe Anzahl von Belastungszyklen.

Gemäß einer bevorzugten Ausführungsform der Erfindung ist vorgesehen, dass das Porositätsverhältnis des Reibbelags größer 60 cm²/mm³ ist, insbesondere größer 70 cm²/mm³ und besonders bevorzugt größer 80 cm²/mm³. Das Porositätsverhältnis gibt das Verhältnis der Materialoberfläche zum Porenvolumen an. Ein hohes Porositätsverhältnis ist im Hinblick auf das Verschleißverhalten vorteilhaft.

Zur Lösung der Aufgabe der Erfindung ist auch ein Verfahren zur Herstellung eines Reibrings vorgesehen, der einen Träger und einen Reibbelag aufweist. Bei diesem Verfahren wird zunächst ein Träger bereitgestellt. Dann wird die Fläche des Trägers, die mit dem Reibbelag versehen werden soll, vorbereitet. Anschließend wird auf den Träger eine Form aufgesetzt, und in die Form wird eine Reibbelag-Mischung eingefüllt, die im Wesentlichen frei von fibrillierten Fasern ist, wobei die Fasern gerichtet sind. Anschließend wird die Reibbelag-Mischung zu einem Reibbelag weiterverarbeitet. Mit dem erfindungsgemäßen Verfahren lassen sich mit geringem Aufwand Reibbeläge herstellen, die sich durch ein besonders gutes Verschleißverhalten auszeichnen.

Vorzugsweise ist vorgesehen, dass bei der Herstellung der Reibbelag-Mischung Wasser als Lösungsmittel zugegeben wird. Die Verwendung von Wasser ist sowohl unter Kostengesichtspunkten als insbesondere auch unter Umweltgesichtspunkten vorteilhaft. Alternativ können auch Ethanol oder Methanol als Lösungsmittel zum Einsatz kommen.

Vorzugsweise ist vorgesehen, dass bei der Herstellung der Reibbelag-Mischung ein Thixotropiermittel zugegeben wird. Das Thixotropiermittel verbessert die Verarbeitbarkeit der Reibbelag-Mischung.

Vorzugsweise ist vorgesehen, dass bei der Weiterverarbeitung der Reibbelag-Mischung zu einem Reibbelag die Reibbelag-Mischung verfestigt wird. Dies kann insbesondere darin bestehen, dass die Form entfernt und anschließend die Reibbelag-Mischung getrocknet wird. Beim Trocknen wird der Reibbelag-Mischung das Lösungsmittel soweit entzogen, dass sie formstabil ist, um nachfolgend weiterverarbeitet zu werden.

Gemäß einer Ausführungsform ist vorgesehen, dass die Form eine verlorene Form ist. Bei dieser Ausgestaltung muss die Gestalt des Reibbelags, insbesondere hinsichtlich der Stirnseiten von Nuten, nicht im Hinblick auf die Entformbarkeit ausgelegt werden. Stattdessen können beispielsweise auch hinterschnittene Querschnittsformen verwendet werden.

Gemäß einer bevorzugten Ausführungsform der Erfindung ist vorgesehen, dass die verfestigte Reibbelag-Mischung heißgepresst wird. Dies gewährleistet ein vollständiges Aushärten des Harzes.

Vorzugsweise ist vorgesehen, dass die Reibbelag-Mischung beim Heißpressen auf etwa 60 % der ursprünglichen Dicke zusammengepresst wird. Auf diese Weise wird ein sehr kompakter und damit verschleißfester Reibbelag erhalten.

Gemäß einer bevorzugten Ausführungsform der Erfindung ist vorgesehen, dass die Reibbelag-Mischung nach dem Einfüllen in die Form mit einem Streichwerkzeug glattgestrichen wird, wodurch gleichzeitig die Fasern ausgerichtet werden. Auf diese Weise lassen sich die Fasern mit einem besonders geringen Aufwand ausrichten.

Gemäß einer Ausgestaltung der Erfindung ist der Reibbelag aus mehreren Schichten zusammengesetzt, die sich hinsichtlich Material und/oder Faserausrichtung unterscheiden. Dies ermöglicht es, den Reibbelag optimal an die Einsatzbedingungen anzupassen. Beispielsweise kann in der Nähe des Trägers eine Reibbelag-Mischung mit einem höheren Anteil an Harz verwendet werden, sodass sich der Reibbelag besonders gut mit dem Träger verbindet.

Die Erfindung wird nachfolgend anhand verschiedener Ausführungsformen beschrieben, die in den beigefügten Zeichnungen dargestellt sind. In diesen zeigen:
- die Figuren 1 bis 6 schematisch verschiedene Schritte bei der Herstellung eines Reibrings mit Reibbelag gemäß einer ersten Ausführungsform;
- Figur 7 in einem schematischen Schnitt einen Reibring gemäß einer zweiten Ausführungsform;
- Figur 8 eine stark vergrößerte Ansicht eines erfindungsgemäßen Reibbelags;
- Figur 9 eine Vergleichsansicht von Reibpapier;
- Figur 10 eine stark vergrößerte Ansicht des Reibbelags eines erfindungsgemäßen Reibrings, bevor die Reibbelag-Mischung beim Heißpressen zusammengepresst wird;
- Figur 11 eine Vergleichsansicht von Reibpapier;
- Figur 12 eine stark vergrößerte Ansicht eines Randabschnittes eines Reibbelags eines erfindungsgemäßen Reibrings;
- Figur 13 eine Vergleichsansicht von Reibpapier;
- Figur 14 den Verlauf des Reibwertes eines erfindungsgemäßen Reibrings über eine hohe Anzahl von Schaltvorgängen; und
- Figur 15 den Verlauf des Reibwertes über der Gleitgeschwindigkeit, wobei Kurven für unterschiedlich hohe Anzahlen von Schaltvorgängen aufgetragen sind.

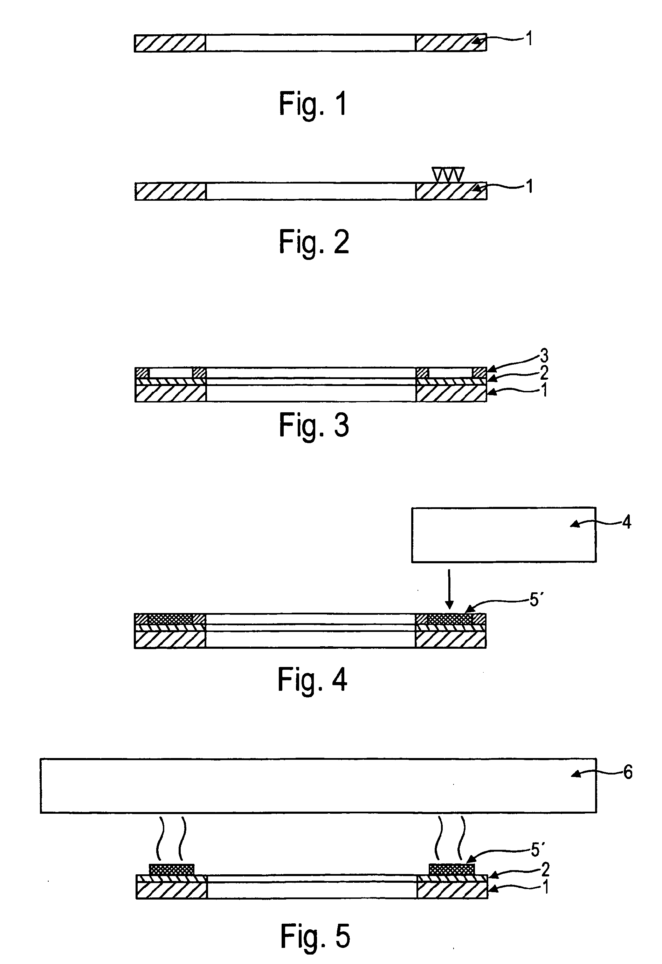

In Figur 1 ist ein Träger 1 gezeigt, der vorzugsweise aus Metall besteht. Der Träger ist hier nur schematisch dargestellt; an der Innenseite oder Außenseite vorhandene Verzahnungen, die zur Drehmomentübertragung dienen, oder vergleichbare Gestaltungen (Nuten, Keilwellenprofil, etc.) sind nicht dargestellt.

Auf mindestens eine Seite des Trägers soll ein Reibbelag aufgebracht werden. Zu diesem Zweck wird die Fläche des Trägers 1, auf die der Reibbelag aufgebracht werden soll, aktiviert. Dies ist in Figur 2 durch die Pfeile dargestellt. Das Aktivieren kann chemisch erfolgen oder vorzugsweise mechanisch durch Sandstrahlen oder Kugelstrahlen.

Auf die aktivierte Fläche wird zunächst eine Klebstoff-Zwischenschicht 2 (siehe Figur 3) aufgebracht, auf die wiederum eine Form 3 aufgesetzt wird. In die Form wird eine Reibbelag-Mischung 5' (siehe Figur 4) eingefüllt, wozu eine Dosiervorrichtung 4 verwendet werden kann. Die Form 3 dient dazu, geometrisch den Bereich abzugrenzen, innerhalb dessen sich die Reibbelag-Mischung 5' ausbreiten kann. Anschließend wird die Form entfernt.

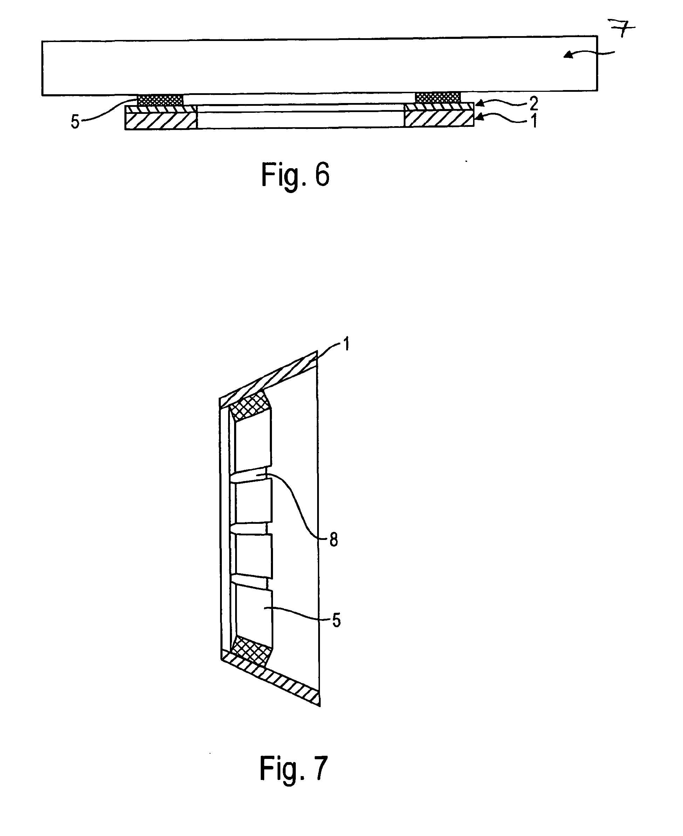

Dann wird die Reibbelag-Mischung 5' getrocknet- (siehe Figur 5), wozu eine Trocknungsvorrichtung 6 verwendet werden kann. Anschließend wird die Reibbelag-Mischung 5' heißgepresst, wodurch sie auf rund 60 % ihrer ursprünglichen Dicke zusammengepresst wird. Gleichzeitig härtet die Reibbelag-Mischung 5' zum fertigen Reibbelag 5 aus. Das Heißpressen ist in Figur 6 schematisch durch eine Kalandrierwalze 7 symbolisiert.

Abweichend von der in Figur 6 gezeigten Ausgestaltung des Reibrings, der im Wesentlichen als ebene Scheibe ausgestaltet ist, können auch andere geometrische Formen verwendet werden. Ein Beispiel ist in Figur 7 gezeigt. Der Reibring weist einen kegelstumpfförmigen Träger 1 auf, der auf seiner Innenseite abschnittsweise mit dem Reibbelag 5 versehen ist. Dargestellt sind hier auch mehrere Nuten 8, die im Reibbelag 5 vorgesehen sind.

Wesentliches Merkmal der beschriebenen Reibringe ist die Zusammensetzung des Reibbelags 5. Dieser besteht aus einem Gemisch aus Harz, Füllstoff und hitzebeständigen Fasern. Zusätzlich wird ein Thixotropiermittel verwendet.

Als Harz kann ein pulverförmiges Resol-Phenolharz verwendet werden. Der Masseanteil des Harzes ist in einem weiten Bereich variabel. Die untere Grenze für den Anteil des Harzes am Feststoffanteil des Reibbelags ergibt sich aus der Notwendigkeit, dass genügend Harz zur Verfügung steht, um den Füllstoff und die Fasern zu einem widerstandsfähigen Reibbelag zu binden. Die Obergrenze des Anteils des Harzes am Feststoffanteil ergibt sich aus der Notwendigkeit, dass der Reibbelag für die Festigkeit und Verschleißfestigkeit einen gewissen Anteil an Füllstoffen und Fasern enthalten muss. Bevorzugte Werte für den Anteil des Harzes am Feststoffanteil betragen insbesondere 15 bis 40 und vorzugsweise 30%.

Als Füllstoff ist insbesondere Grafit geeignet. Bevorzugte Werte für den Masseanteil des Füllstoffs am Feststoffanteil betragen im Bereich von 50 bis 60 %, insbesondere 55 %.

Als Fasern können grundsätzlich alle Arten von Fasern verwendet werden, welche die erforderliche Temperaturbeständigkeit haben, insbesondere eine Schmelztemperatur größer 400 °C. Besonders geeignet sind Carbonfasern, Glasfasern, Phenolharzfasern, Polyacrylnitrilfasern und/oder Melaminfasern. Ein besonderes Merkmal der Fasern besteht darin, dass die Menge der Fasern im Wesentlichen keine fibrillierten Fasern enthält. Ein weiteres besonderes Merkmal besteht darin, dass die Fasern eine vergleichsweise geringe Länge haben, insbesondere nicht länger als 1 mm. Vorzugsweise beträgt die Länge der Fasern maximal 0,3 mm und darunter.

Das Thixotropiermittel ist ein Schichtsilikat, vorzugsweise aus der Gruppe der Smektite, und enthält Lithium-Ionen.

Als Lösungsmittel für die Reibbelag-Mischung wird Wasser, Ethanol oder Methanol verwendet.

Die aus diesen Bestandteilen gebildete Reibbelag-Mischung kann ohne besonderen Aufwand verarbeitet werden, insbesondere in die Form 3 eingefüllt werden. Da sich unter den Fasern im Wesentlichen keine fibrillierten Fasern befinden und die Fasern außerdem vergleichsweise kurz sind, ergeben sich (in Verbindung mit dem Thixotropiermittel) gute Fließeigenschaften. Bei entsprechend präziser Dosierung genügt es, die vorbestimmte Menge an Reibbelag-Mischung 5' in die Form 3 einzufüllen und den Träger 1 zusammen mit der Form 3 einer Vibrationsbewegung auszusetzen. Die Reibbelag-Mischung 5' verteilt sich dann völlig gleichmäßig in der Form. Alternativ kann vorgesehen sein, die Form an der Oberfläche mit einem Streichwerkzeug zu bearbeiten, um eine eventuelle überschüssige Menge an Reibbelag-Mischung 5' abzustreifen.

Falls ein Streichwerkzeug verwendet wird, lässt sich auf diese Weise mit geringem Aufwand bewirken, dass die Fasern in der Reibbelag-Mischung und damit im späteren ausgehärteten Reibbelag parallel zueinander ausgerichtet sind. Alternativ lässt sich eine Ausrichtung der Fasern auch dadurch herbeiführen, dass die Reibbelag-Mischung 5' in geeigneter Weise in die Form 3 eingefüllt wird. In Abhängigkeit von den späteren Einsatzbedingungen können die Fasern beispielsweise in Umfangsrichtung oder auch radial ausgerichtet sein. Wesentlich ist, dass die Fasern alle im Wesentlichen parallel zueinander ausgerichtet sind.

Abweichend von der in den Figuren 1 bis 6 gezeigten Ausführungsform kann auch auf die Klebstoff-Zwischenschicht 2 verzichtet werden. Aufgrund des vergleichsweise hohen Anteils von Harz in der Reibbelag-Mischung verklebt der Reibbelag beim Aushärten mit der aktivierten Fläche des Trägers 1, ohne dass weitere Maßnahmen erforderlich sind.

Die Nuten 8 können im Reibbelag entweder dadurch erhalten werden, dass mittels der Form 3 mehrere voneinander getrennte Blöcke gebildet werden, die alle zusammen den Reibbelag darstellen. Alternativ können die Nuten 8 auch in die Reibbelag-Mischung 5' eingedrückt werden, und zwar sowohl vor als auch nach dem Trocknen. Bei geeigneter Mikrostruktur des Reibbelags kann auf die Nuten 8 sogar komplett verzichtet werden.

Durch das Zusammenwirken von Harz, Füllstoff und Fasern wird das Drucksteifigkeitsverhältnis des Reibbelags des Reibrings so eingestellt, dass es kleiner als 40 % ist, vorzugsweise kleiner als 30 % und insbesondere kleiner als 20 %. Das Drucksteifigkeitsverhältnis ist das Verhältnis von plastischer zu gesamter Deformation des Reibbelags, wie es bei einem Druck-Setzungstest ermittelt werden kann. Bei diesem Test wird beispielsweise die Probe zwischen zwei zylindrischen Stempeln mit einer Vorlast von 0,2 N/mm² beaufschlagt, wobei einer der Stempel feststeht und der andere verschiebbar ist. Die Position des verschiebbaren Stempels in diesem Zustand wird als erste Position bezeichnet. Nach einer Haltezeit wird die Last des verschiebbaren Stempels auf 6,5 N/mm² erhöht. Die sich dann einstellende Position des verschiebbaren Stempels wird als zweite Position definiert. Nach einer weiteren Haltezeit wird die Last wieder auf 0,2 N/mm² reduziert. Die dann vom verschiebbaren Stempel eingenommene Position wird als dritte Position definiert. Die gesamte Verformung ergibt sich aus der Wegdifferenz zwischen der ersten und der zweiten Position, und die plastische Verformung ergibt sich aus der Wegdifferenz zwischen der ersten und der dritten Position. Die mit dem Reibbelag des erfindungsgemäßen Reibrings erzielbaren, kleinen Drucksteifigkeitsverhältnisse führen zu einem hervorragenden Verschleißverhalten.

Ein weiterer Kennwert des Reibbelags des erfindungsgemäßen Reibrings ist das Porositätsverhältnis, ausgedrückt aus dem Quotienten von Oberfläche (gemessen in cm³) zu Porenvolumen (gemessen in mm³). Aufgrund der verwendeten Mischung aus Harz, Füllstoff und Fasern ergibt sich ein hohes Porositätsverhältnis, das größer als 60 ist, insbesondere größer als 70 und vorzugsweise größer als 80.

Im Hinblick auf ein optimales Verschleißverhalten wird das Gemisch aus Harz, Füllstoff und Fasern so gewählt, dass sich ein kleiner Verschleißwert des Reibbelags ergibt, der definiert ist als der Quotient aus Verschleiß (gemessen in mm³) zu Reibarbeit (gemessen in MJ). Der erfindungsgemäße Reibbelag hat bei einer Öltemperatur von 60°C einen Verschleißwert kleiner 3, vorzugsweise kleiner 2,5 und insbesondere kleiner 2.

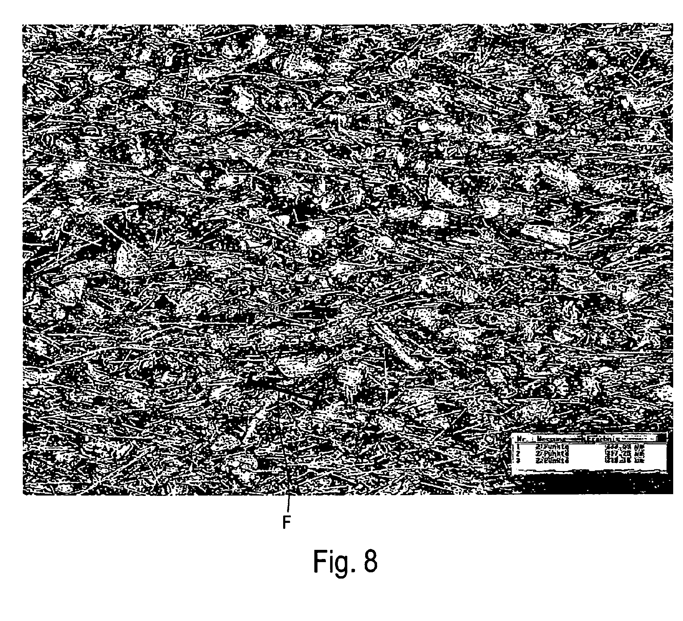

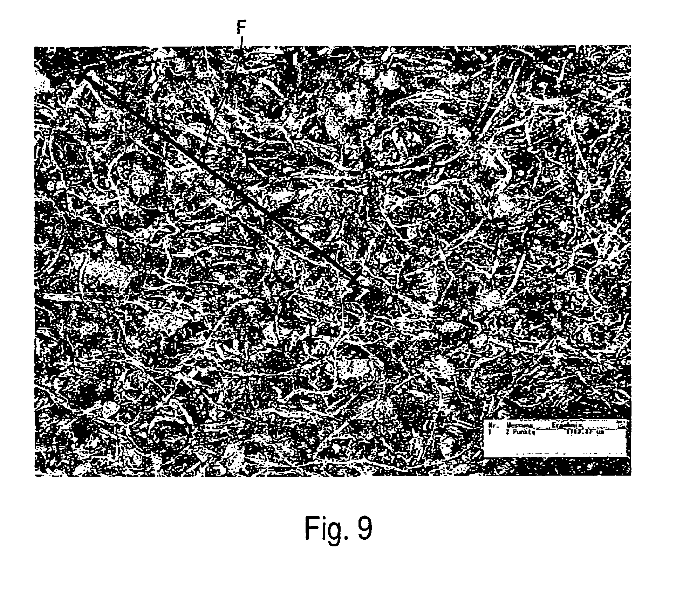

In Figur 8 ist eine mikroskopische Aufnahme des erfindungsgemäßen Reibbelags gezeigt, während in Figur 9 im Vergleich dazu eine mikroskopische Aufnahme von Reibpapier gezeigt ist. Besonders deutlich erkennbar ist der Unterschied hinsichtlich der Länge der einzelnen Fasern. Beispielhaft ist in jeder Ansicht eine typische Faserlänge mit F markiert. Während der erfindungsgemäße Reibbelag deutlich erkennbar sehr kurze, parallel zueinander ausgerichtete Fasern aufweist, sind bei Reibpapier die deutlich längeren, sich untereinander mehrfach kreuzenden Fasern zu sehen.

Der Vergleich der Figuren 8 und 9 lässt erkennen, dass der erfindungsgemäße Reibbelag eine deutlich größere Homogenität hat als Reibpapier; bei Reibpapier sind deutlich Faseranhäufungen zu erkennen.

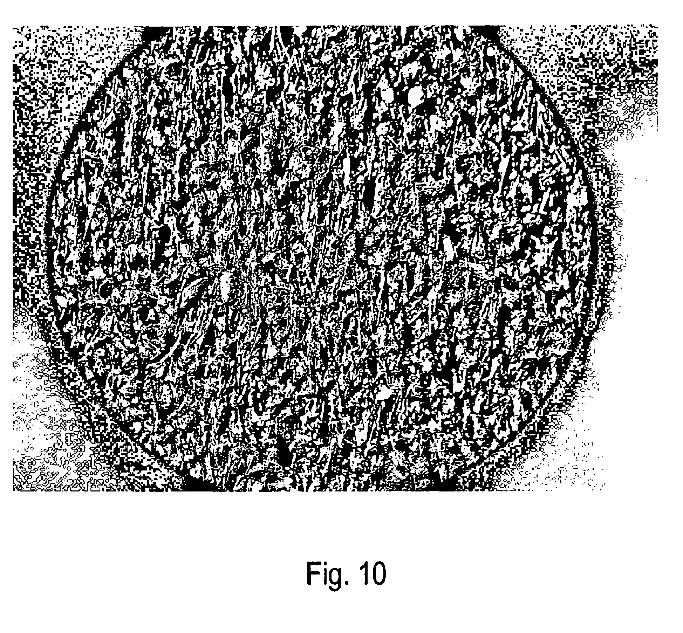

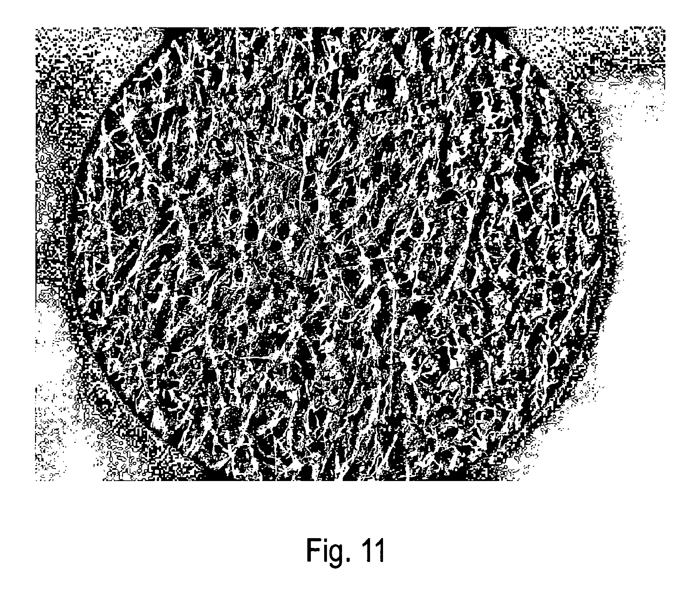

Auch ein Vergleich der unverpressten Reibbelag-Mischung (siehe Figur 10), wie sie gemäß der vorliegenden Erfindung verwendet wird, mit unverpresstem Reibpapier, wie es in Figur 11 dargestellt ist, zeigt deutlich die Unterschiede. Die erfindungsgemäße Reibbelag-Mischung stellt sich bereits in unverpresstem Zustand als deutlich kompakterer Verbund dar, während sich bei Reibpapier deutlich große Hohlräume erkennen lassen.

Der Vergleich der Figuren 10 und 11 zeigt auch, dass die erfindungsgemäße Reibbelag-Mischung eine gerichtete Mikrostruktur hat, und zwar nicht nur hinsichtlich der Fasern, sondern in der gesamten Struktur. Bei Reibpapier ist dagegen keine Vorzugsrichtung erkennbar.

Ein weiterer Unterschied zwischen dem erfindungsgemäßen Reibbelag und Reibpapier .besteht hinsichtlich der Rauheitsverhältnisse. Aufgrund der gerichteten Mikrostruktur unterscheiden sich beim erfindungsgemäßen Reibbelag die Mittenrauwerte Rₐ, gemessen parallel zur Herstellungsrichtung und senkrecht zur Herstellungsrichtung. Die Werte senkrecht zur Herstellungsrichtung gemessen sind um einen Faktor von rund 1,5 größer als die Werte, die parallel zur Herstellungsrichtung gemessen werden. Bei Reibpapier bestehen dagegen keine messrichtungsbedingten Unterschiede in den Mittenrauwerten.

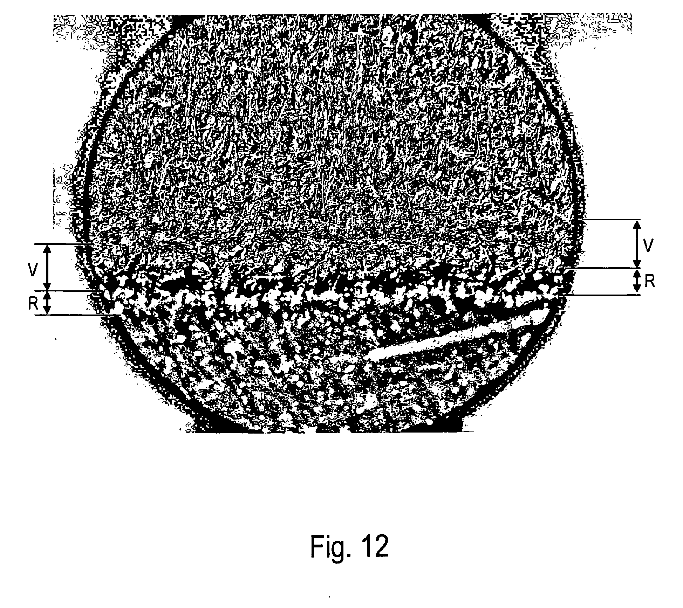

Besonders signifikant sind die Unterschiede am Rand der jeweiligen Reibbeläge. In Figur 12 ist eine Draufsicht auf den Belag gezeigt, wobei der Belag die oberen zwei Drittel des kreisförmigen Ausschnitts einnimmt, während im unteren Drittel der Träger zu sehen ist. Dieser ist hier unscharf, da er außerhalb des Tiefenschärfebereichs der Aufnahme liegt. Die Randzone des Reibbelags ist in Figur 12 mit R und die Verdichtungszone in der Nähe des Randes mit V markiert.

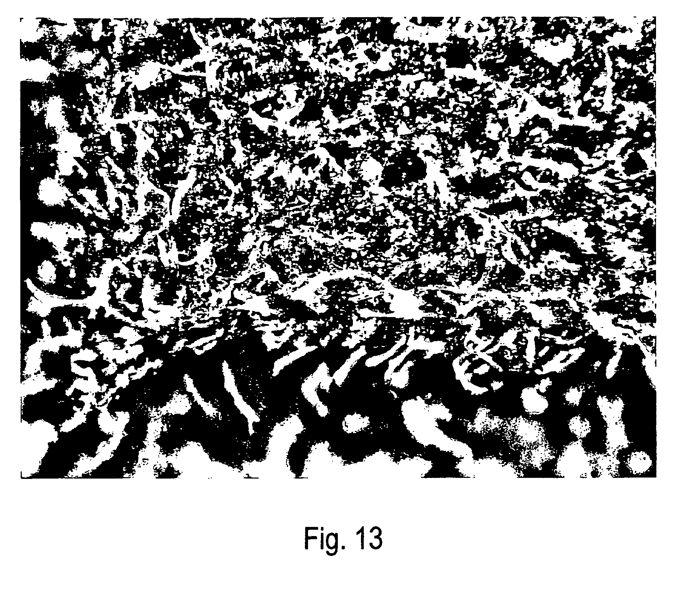

Beim erfindungsgemäßen Reibbelag erstrecken sich die kurzen Fasern, die am Rand liegen, im Wesentlichen innerhalb des Reibbelags und vom Träger weg hin zur Oberfläche des Reibbelags, während gleichzeitig in der Nähe des Randes eine Verdichtung des Reibbelagmaterials zu sehen ist. In Figur 13 ist dagegen deutlich der ausgefranste Rand bei Reibpapier zu sehen. Die sehr langen Fasern stehen frei vom Reibpapier ab (in dieser Darstellung insbesondere nach unten).

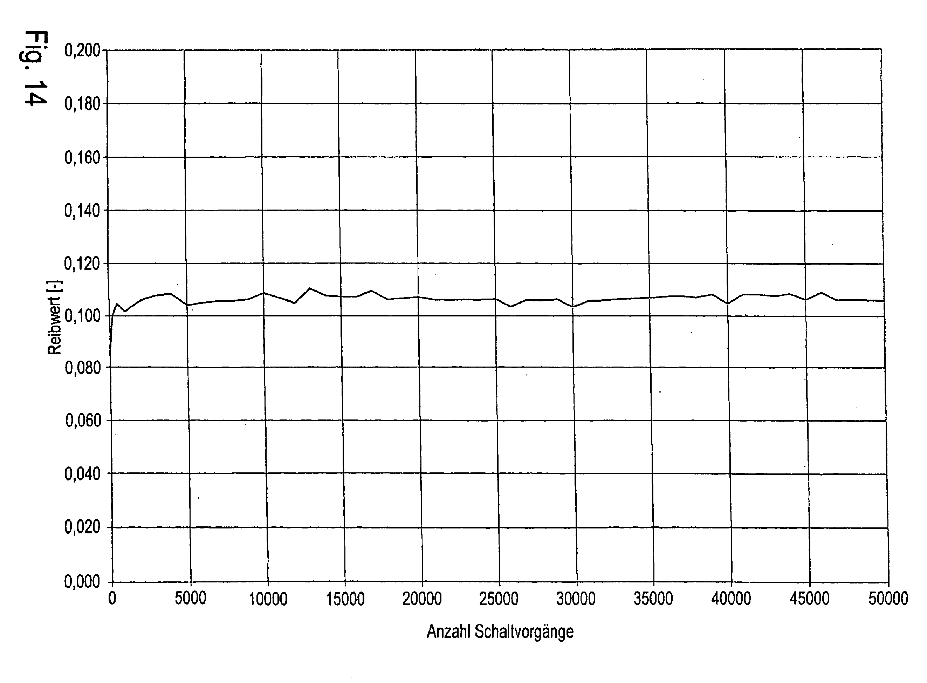

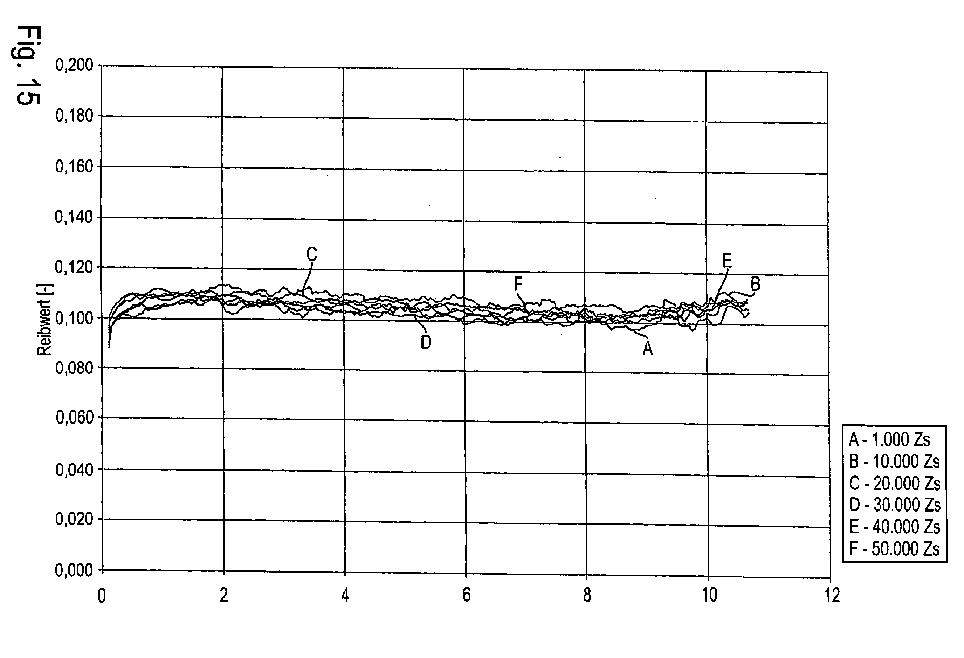

Anhand der Figuren 14 und 15 lassen sich die sehr guten Verschleißeigenschaften des erfindungsgemäßen Reibbelags erkennen. In Figur 14 ist der Reibwert über den Schaltvorgängen einer Kupplung aufgetragen, die mit dem erfindungsgemäßen Reibring ausgestattet ist. Es ist zu sehen, dass sich der Reibwert auch nach einer Vielzahl von Schaltvorgängen nicht ändert; er bleibt im Wesentlichen konstant. In Figur 15 ist der Reibwert über der Gleitgeschwindigkeit aufgetragen, wobei zusätzlich fünf verschiedene Kurven von Reibbelägen dargestellt sind, die einer unterschiedlich hohen Anzahl von Schaltvorgängen ausgesetzt wurden. Es ist in Figur 15 zu sehen, dass der Reibwert über einen sehr großen Bereich der Gleitgeschwindigkeit konstant bleibt.

## Patentansprüche

1. Reibring mit einem Träger (1) und einem Reibbelag, wobei der Reibbelag (5) aus einem Gemisch aus Harz, Füllstoff und Fasern besteht und sich unter den Fasern im Wesentlichen keine fibrillierten Fasern befinden, **dadurch gekennzeichnet, dass** die Fasern im Reibbelag (5) gerichtet enthalten sind.

2. Reibring nach Anspruch 1, **dadurch gekennzeichnet, dass** die Länge der Fasern maximal 1 mm beträgt, insbesondere maximal 0,3 mm beträgt.

3. Reibring nach Anspruch 1 oder 2, **dadurch gekennzeichnet, dass** die Fasern in Umfangsrichtung ausgerichtet sind.

4. Reibring nach einem der vorhergehenden Ansprüche, **dadurch gekennzeichnet, dass** die Fasern aus einem Material bestehen, das eine Schmelztemperatur größer 400 °C hat.

5. Reibring nach Anspruch 4, **dadurch gekennzeichnet, dass** die Fasern Carbonfasern, Glasfasern und/oder Metaminfasern sind.

6. Reibring nach einem der vorhergehenden Ansprüche, **dadurch gekennzeichnet, dass** der Masseanteil der Fasern im Bereich von 10 % bis 20 % des Feststoffanteils beträgt.

7. Reibring nach einem der vorhergehenden Ansprüche, **dadurch gekennzeichnet, dass** der Reibbelag (5) ein Thixotropiermittel enthält.

8. Reibring nach einem der vorhergehenden Ansprüche, **dadurch gekennzeichnet, dass** der Masseanteil des Harzes im Bereich von 15 % bis 40 % des Feststoffanteils beträgt.

9. Reibring nach einem der vorhergehenden Ansprüche, **dadurch gekennzeichnet, dass** das Harz ein pulverförmiges Resol-Phenolharz ist.

10. Reibring nach einem der vorhergehenden Ansprüche, **dadurch gekennzeichnet, dass** der Reibbelag (5) unmittelbar auf den Träger (1) aufgebracht ist.

11. Reibring nach einem der vorhergehenden Ansprüche, **dadurch gekennzeichnet, dass** mindestens eine Nut (8) vorgesehen ist.

12. Reibring nach Anspruch 11, **dadurch gekennzeichnet, dass** die Nut (8) eine Querschnittsform aufweist, die sich von der Oberfläche des Reibbelags zum Träger (1) hin aufweitet.

13. Reibring nach einem der vorhergehenden Ansprüche, **dadurch gekennzeichnet, dass** die Fasern am Rand des Reibbelags (5) von Träger (1) weg abgebogen sind.

14. Reibring nach einem der Ansprüche 1 bis 12, **dadurch gekennzeichnet, dass** die Fasern am Rand des Reibbelags (5) an diesen flach angelegt sind, so dass sie sich senkrecht zum Träger (1) erstrecken.

15. Reibring nach einem der vorhergehenden Ansprüche, **dadurch gekennzeichnet, dass** das Drucksteifigkeitsverhältnis des Reibbelags (5) kleiner 40 % ist.

16. Reibring nach einem der vorhergehenden Ansprüche, **dadurch gekennzeichnet, dass** das Porositätsverhältnis des Reibbelags (5) größer 60 cm²/mm³ ist.

17. Reibring nach einem der vorhergehenden Ansprüche, **dadurch gekennzeichnet, dass** der Mittenrauwert Rₐ gemessen senkrecht zur Herstellungsrichtung des Reibbelags, um einen Faktor von mindestens 1,2, vorzugsweise 1,5, größer ist als der Mittenrauwert Rₐ gemessen parallel zur Herstellungsrichtung.

18. Verfahren zur Herstellung eines Reibrings, nach einem der vorhergehenden Ansprüchen, der einen Träger (1) und einen Reibbelag (5) aufweist, enthaltend die Schritte:
- es wird ein Träger (1) bereitgestellt;
- die Fläche des Trägers (1), die mit dem Reibbelag (5) versehen werden soll, wird vorbereitet;
- auf den Träger (1) wird eine Form (3) aufgesetzt;
- in die Form wird eine Reibbelag-Mischung (5') eingefüllt, die im wesentlichen frei von fibrillierten Fasern ist, wobei die die Fasern gerichtet sind;
- die Reibbelag-Mischung wird zu einem Reibbelag (5) weiterverarbeitet.

19. Verfahren nach Anspruch 18, **dadurch gekennzeichnet, dass** bei der Herstellung der Reibbelag-Mischung (5') Wasser, Ethanol oder Methanol als Lösungsmittel zugegeben wird.

20. Verfahren nach Anspruch 18 oder Anspruch 19, **dadurch gekennzeichnet, dass** bei der Herstellung der Reibbelag-Mischung (5') ein Thixotropiermittel zugegeben wird.

21. Verfahren nach einem der Ansprüche 18 bis 20, **dadurch gekennzeichnet, dass** bei der Weiterverarbeitung der Reibbelag-Mischung (5') zu einem Reibbelag (5) die Reibbelag-Mischung (5') verfestigt wird.

22. Verfahren nach einem der Ansprüche 18 bis 21, **dadurch gekennzeichnet, dass** die Form (3) eine verlorene Form ist.

23. Verfahren nach einem der Ansprüche 18 bis 22, **dadurch gekennzeichnet, dass** die getrocknete Reibbelag-Mischung (5') heißgepresst wird.

24. Verfahren nach Anspruch 23, **dadurch gekennzeichnet, dass** die Reibbelag-Mischung (5') beim Heißpressen auf etwa 60 % der ursprünglichen Dicke zusammengepresst wird.

25. Verfahren nach einem der Ansprüche 18 bis 24, **dadurch gekennzeichnet, dass** die Reibbelag-Mischung (5') nach dem Einfüllen in die Form (3) mit einem Streichwerkzeug glattgestrichen wird, wodurch gleichzeitig die Fasern ausgerichtet werden.

26. Verfahren nach einem der Ansprüche 18 bis 25, **dadurch gekennzeichnet, dass** der Reibbelag (5) aus mehreren Schichten zusammengesetzt ist, die sich hinsichtlich Material und/oder Faserausrichtung unterscheiden.

27. Verfahren nach einem der Ansprüche 18 bis 26, **dadurch gekennzeichnet, dass** auf die Fläche des Trägers (1), die vorbereitet wird, ein Klebstoff (2) aufgetragen wird.

## Claims

1. A friction ring comprising a carrier (1) and a friction lining, the friction lining (5) consisting of a mixture of resin, filler and fibers, and substantially no fibrillated fibers being present among the fibers, **characterized in that** the fibers are contained in the friction lining (5) in a directional fashion.

2. The friction ring according to claim 1, **characterized in that** the length of the fibers amounts to a maximum of 1 mm, in particular a maximum of 0.3 mm.

3. The friction ring according to claim 1 or 2, **characterized in that** the fibers are oriented in the peripheral direction.

4. The friction ring according to any of the preceding claims, **characterized in that** the fibers consist of a material having a melting temperature of higher than 400°C.

5. The friction ring according to claim 4, **characterized in that** the fibers are carbon fibers, glass fibers and/or melamine fibers.

6. The friction ring according to any of the preceding claims, **characterized in that** the mass fraction of the fibers is in the range of from 10 % to 20 % of the solid fraction.

7. The friction ring according to any of the preceding claims, **characterized in that** the friction lining (5) contains a thixotropic agent.

8. The friction ring according to any of the preceding claims, **characterized in that** the mass fraction of the resin is in the range of from 15 % to 40 % of the solid fraction.

9. The friction ring according to any of the preceding claims, **characterized in that** the resin is a powdery resol phenolic resin.

10. The friction ring according to any of the preceding claims, **characterized in that** the friction lining (5) is applied directly on the carrier (1).

11. The friction ring according to any of the preceding claims, **characterized in that** at least one groove (8) is provided.

12. The friction ring according to claim 11, **characterized in that** the groove (8) has a cross-sectional shape which widens from the surface of the friction lining towards the carrier (1).

13. The friction ring according to any of the preceding claims, **characterized in that** the fibers on the edge of the friction lining (5) are bent off away from the carrier (1).

14. The friction ring according to any of claims 1 to 12, **characterized in that** the fibers on the edge of the friction lining (5) are positioned flatly against the latter, so that they extend perpendicularly to the carrier (1).

15. The friction ring according to any of the preceding claims, **characterized in that** the compressive rigidity ratio of the friction lining (5) is smaller than 40 %.

16. The friction ring according to any of the preceding claims, **characterized in that** the porosity ratio of the friction lining (5) is greater than 60 cm²/mm³.

17. The friction ring according to any of the preceding claims, **characterized in that** the average roughness Rₐ as measured perpendicularly to the direction of production of the friction lining, is greater by a factor of at least 1.2, preferably 1.5, than the average roughness Rₐ as measured parallel to the direction of production.

18. A method of producing a friction ring according to any of the preceding claims, which includes a carrier (1) and a friction lining (5), comprising the steps of:
- providing a carrier (1);
- preparing that surface of the carrier (1) which is to be provided with the friction lining (5);
- placing a mold (3) onto the carrier (1);
- filling a friction lining mixture (5') into the mold, the friction lining mixture being substantially free from fibrillated fibers, the fibers being directional;
- further processing the friction lining mixture to form a friction lining (5).

19. The method according to claim 18, **characterized in that** water, ethanol or methanol is added as a solvent in the production of the friction lining mixture (5').

20. The method according to claim 18 or claim 19, **characterized in that** a thixotropic agent is added in the production of the friction lining mixture (5').

21. The method according to any of claims 18 to 20, **characterized in that** in the further processing of the friction lining mixture (5') to form a friction lining (5), the friction lining mixture (5') is solidified.

22. The method according to any of claims 18 to 21, **characterized in that** the mold (3) is an expendable mold.

23. The method according to any of claims 18 to 22, **characterized in that** the dried friction lining mixture (5') is hot-pressed.

24. The method according to claim 23, **characterized in that** the friction lining mixture (5') is compressed to about 60 % of its original thickness in the hot-pressing process.

25. The method according to any of claims 18 to 24, **characterized in that** after being filled into the mold (3), the friction lining mixture (5') is smoothed with a spreading tool, whereby the fibers are aligned at the same time.

26. The method according to any of claims 18 to 25, **characterized in that** the friction lining (5) is composed of a plurality of layers which differ with regard to material and/or fiber orientation.

27. The method according to any of claims 18 to 26, **characterized in that** an adhesive (2) is applied onto that surface of the carrier (1) which is prepared.

## Revendications

1. Anneau de friction comportant un support (1) et une garniture de friction, la garniture de friction (5) étant constituée d'un mélange de résine, de matière de charge et de fibres, et les fibres ne comprenant sensiblement pas de fibres fibrillées, **caractérisé en ce que** les fibres sont contenues dans la garniture de friction (5) en étant alignées.

2. Anneau de friction selon la revendication 1, **caractérisé en ce que** la longueur des fibres s'élève au maximum à 1 mm, en particulier au maximum à 0,3 mm.

3. Anneau de friction selon la revendication 1 ou 2, **caractérisé en ce que** les fibres sont orientées en direction périphérique.

4. Anneau de friction selon l'une des revendications précédentes, **caractérisé en ce que** les fibres sont constituées d'un matériau dont la température de fusion est supérieure à 400 °C.

5. Anneau de friction selon la revendication 4, **caractérisé en ce que** les fibres sont des fibres de carbone, des fibres de verre et/ou des fibres de mélamine.

6. Anneau de friction selon l'une des revendications précédentes, **caractérisé en ce que** la fraction massique des fibres est dans la plage de 10 % à 20 % de la proportion de matières solides.

7. Anneau de friction selon l'une des revendications précédentes, **caractérisé en ce que** la garniture de friction (5) comprend un agent thixotrope.

8. Anneau de friction selon l'une des revendications précédentes, **caractérisé en ce que** la fraction massique de la résine est dans la plage de 15 % à 40 % de la proportion de matières solides.

9. Anneau de friction selon l'une des revendications précédentes, **caractérisé en ce que** la résine est une résine phénolique de type résol en poudre.

10. Anneau de friction selon l'une des revendications précédentes, **caractérisé en ce que** la garniture de friction (5) est déposée directement sur le support (1).

11. Anneau de friction selon l'une des revendications précédentes, **caractérisé en ce qu'**il est prévu au moins une rainure (8).

12. Anneau de friction selon la revendication 11, **caractérisé en ce que** la rainure (8) présente une forme en section transversale qui va en s'élargissant de la surface de la garniture de friction vers le support (1).

13. Anneau de friction selon l'une des revendications précédentes, **caractérisé en ce que** les fibres au bord de la garniture de friction (5) sont courbées en éloignement du support (1).

14. Anneau de friction selon l'une des revendications 1 à 12, **caractérisé en ce que** les fibres au bord de la garniture de friction (5) sont posées à plat contre celle-ci de manière à s'étendre perpendiculairement au support (1).

15. Anneau de friction selon l'une des revendications précédentes, **caractérisé en ce que** le taux de rigidité à la pression de la garniture de friction (5) est inférieure à 40 %.

16. Anneau de friction selon l'une des revendications précédentes, **caractérisé en ce que** le taux de porosité de la garniture de friction (5) est supérieure à 60 cm²/mm³.

17. Anneau de friction selon l'une des revendications précédentes, **caractérisé en ce que** la rugosité moyenne Rₐ mesurée perpendiculairement à la direction de fabrication de la garniture de friction est supérieure d'un facteur de 1,2 au moins, de préférence de 1,5, à la rugosité moyenne Rₐ mesurée parallèlement à la direction de fabrication.

18. Procédé de fabrication d'un anneau de friction selon l'une des revendications précédentes, comportant un support (1) et une garniture de friction (5), comprenant les étapes suivantes :
- on fournit un support (1) ;
- on prépare la surface du support (1) destinée à être pourvue de la garniture de friction (5) ;
- on pose un moule (3) sur le support (1) ;
- on verse un mélange (5') de garniture de friction dans le moule, qui est sensiblement exempt de fibres fibrillées, les fibres étant alignées ;
- on transforme le mélange de garniture de friction en une garniture de friction (5).

19. Procédé selon la revendication 18, **caractérisé en ce que** lors de la réalisation du mélange (5') de garniture de friction, on ajoute de l'eau, de l'éthanol ou du méthanol à titre de solvant.

20. Procédé selon la revendication 18 ou selon la revendication 19, **caractérisé en ce que** lors de la réalisation du mélange (5') de garniture de friction, on ajoute un agent thixotrope.

21. Procédé selon l'une des revendications 18 à 20, **caractérisé en ce que** lors de la transformation du mélange (5') de garniture de friction en une garniture de friction (5), on fait solidifier le mélange (5') de garniture de friction.

22. Procédé selon l'une des revendications 18 à 21, **caractérisé en ce que** le moule (3) est un moule perdu.

23. Procédé selon l'une des revendications 18 à 22, **caractérisé en ce que** le mélange (5') de garniture de friction sec est pressé à chaud.

24. Procédé selon la revendication 23, **caractérisé en ce que** lors du pressage à chaud, le mélange (5') de garniture de friction est comprimé à environ 60 % de l'épaisseur initiale.

25. Procédé selon l'une des revendications 18 à 24, **caractérisé en ce que** le mélange (5') de garniture de friction, une fois versé dans le moule (3), est lissé au moyen d'un outil de lissage, en orientant simultanément les fibres.

26. Procédé selon l'une des revendications 18 à 25, **caractérisé en ce que** la garniture de friction (5) est composée de plusieurs couches qui se distinguent de par le matériau et/ou de par l'orientation des fibres.

27. Procédé selon l'une des revendications 18 à 26, **caractérisé en ce qu'**une colle (2) est appliquée sur la couche du support (1) en cours de préparation.
